Europäisches Patentamt

European Patent Office

Office européen des brevets

(19)

(11) **EP 0 833 421 B1**

(12) **FASCICULE DE BREVET EUROPEEN**

(45) Date de publication et mention
de la délivrance du brevet:
**08.11.2006 Bulletin 2006/45**

(51) Int Cl.:
*H02G 15/068* (2006.01)   *H02G 15/184* (2006.01)

(21) Numéro de dépôt: **97402245.1**

(22) Date de dépôt: **26.09.1997**

(54) **Equipement pour extrémité de câble et matériau de constitution de l'équipement**

Garnitur für Kabelendverschluss und Material für die Bildung der Garnitur

Fitting for cable end and material constituting the fitting

(84) Etats contractants désignés:
**BE CH DE ES FR GB IT LI**

(30) Priorité: **26.09.1996 FR 9611730**

(43) Date de publication de la demande:
**01.04.1998 Bulletin 1998/14**

(73) Titulaire: **Silec Cable**
**77130 Montereau Fault Yonne (FR)**

(72) Inventeurs:
 • **Luton, Marie-Hélène**
 **75626 Paris Cédex 13 (FR)**
 • **Gaillon, Christine**
 **75626 Paris Cédex 13 (FR)**

(74) Mandataire: **Bloch, Gérard et al**
**Cabinet Bloch & Associés**
**2, square de l'Avenue du Bois**
**75116 Paris (FR)**

(56) Documents cités:
**EP-A- 0 435 569**     **DE-A- 4 417 363**
**DE-A- 4 417 364**

 • **PATENT ABSTRACTS OF JAPAN vol. 17, no. 535 (E-1439), 27 septembre 1993 & JP 05 146042 A (SHOWA ELECTRIC WIRE & CABLE), 11 juin 1993**
 • **DATABASE WPI Week 9642 Derwent Publications Ltd., London, GB; AN 96-422158 XP002034226 & JP 08 208995 A (SHINETSU CHEM IND) , 13 août 1996**

**Description**

Il ne faut pas entendre par extrémité de câble ce que l'homme du métier entend généralement.

Une extrémité de câble, dans le domaine des câbliers, est la partie terminale d'un câble plongée dans un milieu ambiant générateur de problèmes électriques sur cette partie terminale. Dans une jonction ou une dérivation, il y a au moins deux parties terminales de câble. Au sens de la présente invention, et par souci de simplicité, il faut entendre par extrémité de câble, sa partie terminale.

Les réseaux de transport et de distribution de l'énergie électrique sont constitués de lignes, le plus souvent aériennes, reliant un générateur d'énergie électrique, une centrale nucléaire par exemple, à une pluralité d'installations électriques d'usagers, afin de fournir ces derniers en électricité.

Les lignes comprennent des câbles de transport de l'énergie électrique sous des tensions élevées (moyennes, hautes et très hautes tensions), les lignes de grande longueur comprenant une pluralité de câbles joints les uns aux autres à leurs extrémités.

Structurellement, de tels câbles comprennent une âme métallique supportant les hautes tensions, et entourée d'une gaine isolante comportant un manchon intermédiaire d'isolation électrique entouré par une gaine-écran métallique recouverte d'une gaine extérieure de protection classique. En outre, le manchon isolant est généralement entouré de deux couches semiconductrices.

En fonctionnement, l'âme métallique est portée au potentiel de haute tension et la gaine-écran au potentiel de masse.

Rappelons que la mise sous tension des deux armatures métalliques d'un condensateur, voisines et séparées par un isolant, à des potentiels respectifs différents V1 et V2, créée entre les armatures un champ électrique E d'intensité proportionnelle à la différence de potentiels et inversement proportionnelle à la distance d séparant les armatures :

$$E = K \frac{V2 - V1}{d},$$

K étant une constante de proportionnalité.

Dans le cas d'un condensateur cylindrique, d doit être considéré comme la distance radiale séparant les deux armatures.

Le câble précédemment évoqué se comporte comme un condensateur cylindrique avec une armature interne, l'âme, et une armature externe, la gaine-écran, le manchon isolant intermédiaire étant prévu pour supporter le champ électrique intense apparaissant entre les deux armatures. Aux extrémités de câble, de connexion avec le générateur ou avec l'une des installations d'usager, ou de jonction avec un autre câble, la gaine-écran et la gaine de protection sont interrompues. Une telle interruption crée, en fonctionnement, d'importantes contraintes diélectriques, un effet de pointe, caractérisé par une forte concentration des lignes équipotentielles et donc un champ électrique intense, pouvant apparaître aux hautes tensions et provoquer le claquage de l'air environnant et donc la destruction du câble.

Pour diminuer de telles contraintes diélectriques, il faut rendre le champ électrique loin de la gaine-écran interrompue compatible avec l'environnement.

Une solution connue consiste à monter, sur l'extrémité interrompue du câble, un cône déflecteur en matériau conducteur présentant une forme de trompette divergeant depuis la gaine-écran, et favorisant un étalement des lignes équipotentielles. Cependant, un tel cône ne suffisant pas à éviter les claquages, aux hautes tensions notamment, on l'associe généralement à un système d'isolation électrique comprenant un matériau isolant présentant des caractéristiques diélectriques, de rigidité notamment, supérieures à celles de l'air, avec lequel on entoure l'extrémité de câble denudée. Le matériau isolant peut être une huile minérale ou de synthèse, un gaz (l'hexafluorure de soufre SF6 par exemple), ou un élastomère (Ethylène Propylène Diène Monomère EPDM, Silicone). Cependant, tous ces isolants ont des permittivités relatives $\varepsilon_r$ classiques (de l'ordre de 3 à 5), c'est pourquoi de tels systèmes d'isolation doivent être volumineux pour être suffisamment efficaces.

Une autre solution, enseignée par le document FR-2 656 962-B1, propose d'entourer l'extrémité interrompue de câble d'un manchon déflecteur conducteur ou semi-conducteur autour duquel est disposé un matériau à haute permittivité ($\varepsilon_r$ de l'ordre de 10) dont l'épaisseur diminue depuis le manchon déflecteur vers l'extrémité du câble. Un tel équipement d'extrémité de câble favorise l'étalement des lignes équipotentielles sans l'inconvénient d'un volume trop important. Néanmoins, cette solution n'est pas satisfaisante.

On connaît encore, par le document EP-0 435 569, un manchon pour entourer une jonction ou une extrémité de câble électrique comprenant à chacune de ses deux extrémités une couche intérieure constituée en un matériau à haute permittivité relative comprenant un élastomère silicone liquide et des particules conductrices. Cette solution n'est pas non plus satisfaisante.

La présente invention propose d'abord de réduire le volume de tels équipements d'extrémité.

A cet effet, l'invention concerne un équipement, pour extrémité de câble sous tension, destiné à diminuer le champ électrique au voisinage de l'extrémité de câble, comprenant un manchon déflecteur constitué d'un mélange comprenant un élastomère silicone liquide et des charges de conduction, caractérisé par le fait que le mélange présente des caractéristiques diélectriques non linéaires, sa permittivité augmentant avec l'intensité du champ électrique.

Grâce à cela, on résout bien les problèmes de l'art antérieur, l'équipement de l'invention étant constitué, au moins en partie, d'un matériau ayant une permittivité relative non linéaire et supérieure à 10 aux hautes tensions. Non seulement le dispositif réduit le champ électrique en son sein sans être de volume encombrant, mais encore il n'est pas le siège de phénomènes thermiques gênants, grâce à une bonne rigidité diélectrique, des pertes diélectriques et une conductivité faibles.

De préférence, le mélange comprend des charges de cohésion.

Grâce à cela, on améliore la tenue mécanique du cône déflecteur. En outre, les caractéristiques mécaniques du matériau constitutif du dispositif (dureté, résistance au déchirement, rémanence, allongement à la rupture) permettent une fabrication et des transformations du dispositif au moindre coût.

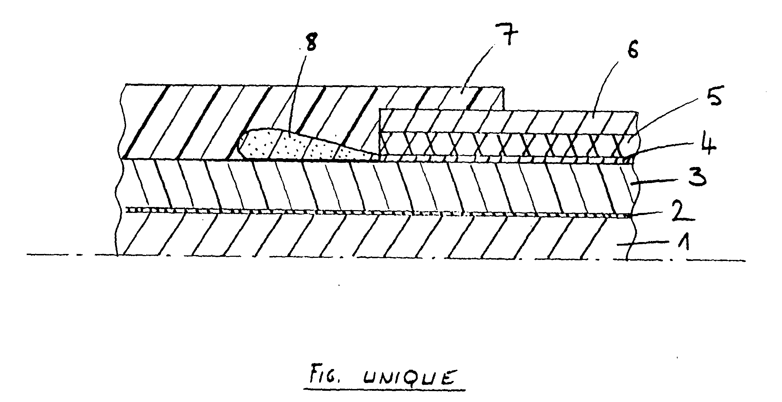

L'invention sera mieux comprise à l'aide de la description suivante d'une forme de réalisation avantageuse de l'équipement de l'invention, en référence à la figure unique annexée qui représente une vue en coupe d'une extrémité de câble avec l'équipement de l'invention.

Un câble, destiné à transporter de l'énergie électrique aux hautes tensions, peut être connecté, à ses extrémités, à un générateur ou à une installation électriques, ou encore joint à un autre câble. L'équipement est destiné à modifier la structure de l'extrémité du câble afin de diminuer le champ électrique et les contraintes diélectriques au voisinage de l'extrémité du câble à hautes tensions, en favorisant un étalement des lignes équipotentielles.

Dans l'exemple particulier de la description, l'équipement est monté sur une extrémité de câble, au sens où l'entend l'homme du métier, à savoir la partie terminale du câble plongée dans un milieu ambiant générateur de problèmes électriques sur cette partie terminale.

Structurellement, le câble comprend une âme métallique 1, supportant les hautes tensions entourée d'un manchon isolant intermédiaire 3, une gaine-écran métallique 5 disposée autour du manchon isolant 3, et une gaine extérieure 6 de protection classique entourant la gaine-écran 5. En outre, la paroi externe de l'âme métallique 1 et la paroi interne de la gaine-écran métallique 5 sont ici chacune recouverte d'une couche semi-conductrice 2, 4 constituée en l'espèce en polyéthylène chargé de noir de carbone, et présentant une résistivité transversale d'environ $10^4$ Ohms.m.

A l'extrémité du câble, la gaine de protection extérieure 6, la gaine-écran 5 et sa couche semi-conductrice 4 sont interrompues, l'âme métallique 1 et le manchon isolant 3 se prolongeant.

Un manchon déflecteur 8 est disposé autour du manchon isolant 3 dénudé et a la forme, en section transversale, d'un cône divergeant depuis l'extrémité de la couche semi-conductrice 4 et présentant une extrémité libre arrondie. Le cône déflecteur 8 est constitué d'un matériau, décrit plus précisément par la suite.

L'équipement comprend en outre un isolant 7, ici un élastomère en silicone, entourant la partie d'extrémité interrompue de la gaine de protection extérieure 6, le cône déflecteur 8 et l'extrémité dénudée du câble. On notera que l'isolant 7 pourrait aussi être un élastomère en EPDM (Ethylène Propylène Diène Monomère).

Après la description structurelle du câble et de son extrémité équipée pour une connexion, le matériau constitutif du cône déflecteur 8 va maintenant être décrit.

Matériau constitutif du manchon déflecteur

Le matériau constitutif du manchon déflecteur 8 est un mélange comprenant :

- un élastomère silicone isolant LSR (Liquid Silicone Rubber) fabriqué par la société BAYER et,

- des charges de conduction rendant le matériau semi-conducteur.

Ce mélange présente des caractéristiques diélectriques non linéaires, sa tangente d'angle de pertes diélectriques et sa permittivité relative augmentant avec l'intensité du champ électrique auquel il est soumis.

Les charges de conduction sont constituées de noir de carbone de basse structure, mais pourraient aussi comprendre du noir de carbone de moyenne ou de haute structure ou de l'élastomère silicone liquide conducteur LSR, ou encore un mélange de ces charges.

On a choisi le mélange suivant, présentant les caractéristiques ci-dessous :

- une rigidité diélectrique > 4 kv/mm,
- une tangente de l'angle

de perte diélectrique < 4000 10$^{-4}$,
- une permittivité relative < 50,
- une résistivité transversale $\geq 10^{13}$ Ω.m,

et de formulation :

- 50 à 60% de silicone LSR isolant SILOPREN 2530,
- 40 à 50% de noir de carbone Thermax MTN 990.

Les différents essais réalisés sur cette formulation ont permis d'obtenir les résultats suivants, sur 8 échantillons :

- rigidité diélectrique : 4 à 10 kv/mm,
- tangente de l'angle
  de perte diélectrique : 0,1 à 0,4,
- permittivité relative : 30 à 50
- résistivité transversale : $10^{13}$ à $10^{17}$ Ω.m.

D'autre part, on a pu obtenir les valeurs suivantes :

| Champ électrique (V/mm) | 200 | 400 | 600 | 700 |
|---|---|---|---|---|
| Permittivité relative | 30 | 40 | 45 | 50 |

**Revendications**

1. Equipement (7,8), pour extrémité de câble (1-6) sous tension, destiné à diminuer le champ électrique au voisinage de l'extrémité de câble, comprenant un manchon déflecteur (8) constitué d'un mélange comprenant un élastomère silicone liquide et des charges de conduction, **caractérisé par le fait que** le mélange présente des caractéristiques diélectriques non linéaires, sa permittivité augmentant avec l'intensité du champ électrique.

2. Equipement selon la revendication 1, dans lequel le mélange du manchon déflecteur comporte des charges de cohésion.

**Claims**

1. Fitting (7, 8), for a live cable end (1-6), intended to reduce the electrical field near the cable end, comprising a deflector sleeve (8) formed from a mixture comprising a liquid silicone elastomer and conduction loads, **characterised in that** the mixture has non linear dielectric properties and its permittivity increases with the intensity of the electrical field.

2. Fitting as claimed in Claim 1, wherein the mixture of the deflector sleeve has cohesion loads.

**Patentansprüche**

1. Garnitur (7, 8) für einen unter Spannung stehenden Kabelendverschluß (1-6), die zum Abschwächen des elektrischen Feldes in der Nähe des Kabelendverschlusses dient, mit einer Ablenkmuffe (8) aus einer Mischung, welche ein flüssiges Silikonelastomer und leitfähige Füllstoffe aufweist,
   **dadurch gekennzeichnet,**
   **daß** die Mischung nicht-lineare dielektrische Eigenschaften besitzt, wobei ihre Permittivität mit der Stärke des elektrischen Feldes zunimmt.

2. Mischung nach Anspruch 1,
   wobei die Mischung der Ablenkmuffe kohäsive Beimischungen aufweist.

EP 0 833 421 B1

FiG. UNIQUE

5